# EUROPEAN PATENT SPECIFICATION

(11) **EP 3 397 647 B1**
(45) Date of publication and mention of the grant of the patent: **07.04.2021**
(21) Application number: 16831951.5
(22) Date of filing: 30.12.2016
(51) Int. Cl.: C08B 1/06, C08B 1/08, C08B 11/14, C08B 15/06, C08B 15/08

(54) **BIOPOLYMER, PROCESS FOR PRODUCING A BIOPOLYMER, PROCESS FOR PRODUCING PAPER, PROCESS FOR PRODUCING CELLULOSE, USE OF A BIOPOLYMER AND PRODUCT**
BIOPOLYMER, PROZESS ZUR HERSTELLUNBG EINES BIOPOLYMERS, PROZESS ZUR HERSTELLUNG VON PAPIER, PROZESS ZUR HERSTELLUNG VON ZELLULOSE, VERWENDUNG EINES BIOPOLYMERS UND DAS PRODUKT
BIOPOLYMERE, MÉTHODE POUR LA PRODUCTION D'UN BIOPOLYMERE, MÉTHODE POUR LA PRODUCTION DE PAPIER, MÉTHODE POUR LA PRODUCTION DE CELLULOSE, UTILISATION D'UN BIOPOLYMÈRE ET UN PRODUIT

(30) Priority: 30.12.2015 BR 102015330057
(43) Date of publication of application: 07.11.2018
(73) Proprietor: Cargill, Incorporated, Wayzata, MN 55391 (US)
(72) Inventor: DE AQUIAR, Fabio Eliseu Cardoso, 04709-111 São Paulo - SP (BR); DE LIMA, Daniel Henrique Gerhardt, 04709-111 São Paulo - SP (BR); DE OLIVEIRA, Grasielle Silva, 04709-111 São Paulo - SP (BR); PEIXOTO, Erivelton Cardoso, 04709-111 São Paulo - SP (BR)
(74) Representative: Morariu Radu, Mihai Dorin
(86) International application number: PCT/US2016/069432
(87) International publication number: WO 2017/117503

(56) References cited:
- EP-A1- 2 428 610
- EP-A1- 2 532 774
- EP-A1- 2 824 115
- EP-A1- 2 975 084
- WO-A1-2004/062703
- WO-A1-2014/147293
- DE-A1- 19 520 804
- GB-A- 2 076 396
- JP-A- 2015 071 848
- JP-A- 2015 150 546
- PER STENSTAD ET AL: "Chemical surface modifications of microfibrillated cellulose", CELLULOSE, KLUWER ACADEMIC PUBLISHERS (DORDRECHT), NL, vol. 15, no. 1, 25 July 2007 (2007-07-25), pages 35-45, XP019570934, ISSN: 1572-882X
- RINAUDO M ET AL: "Characterization and properties of cationic cellulosic fibres", POLYMER, ELSEVIER SCIENCE PUBLISHERS B.V, GB, vol. 41, no. 2, 1 January 2000 (2000-01-01), pages 607-613, XP004190028, ISSN: 0032-3861, DOI: 10.1016/S0032-3861(99)00206-2
- ALOULOU F ET AL: "Modified cellulose fibres for adsorption of organic compound in aqueous solution", SEPARATION AND PURIFICATION TECHNOLOGY, ELSEVIER SCIENCE, AMSTERDAM, NL, vol. 52, no. 2, 1 December 2006 (2006-12-01), pages 332-342, XP028035536, ISSN: 1383-5866, DOI: 10.1016/J.SEPPUR.2006.05.008 [retrieved on 2006-12-01]
- HANNA DE LA MOTTE ET AL: "Molecular characterization of hydrolyzed cationized nanocrystalline cellulose, cotton cellulose and softwood kraft pulp using high resolution 1D and 2D NMR", CARBOHYDRATE POLYMERS, APPLIED SCIENCE PUBLISHERS, LTD. BARKING, GB, vol. 85, no. 4, 16 March 2011 (2011-03-16) , pages 738-746, XP028211139, ISSN: 0144-8617, DOI: 10.1016/J.CARBPOL.2011.03.038 [retrieved on 2011-04-06]
- JUHO SIRVI ET AL: "Synthesis of highly cationic water-soluble cellulose derivative and its potential as novel biopolymeric flocculation agent", CARBOHYDRATE POLYMERS, APPLIED SCIENCE PUBLISHERS, LTD. BARKING, GB, vol. 86, no. 1, 19 April 2011 (2011-04-19) , pages 266-270, XP028378222, ISSN: 0144-8617, DOI: 10.1016/J.CARBPOL.2011.04.046 [retrieved on 2011-04-28]
- MORAL ANA ET AL: "Alkalization and Cationization of Cellulose: Effects on intrinsic viscosity", FIBERS AND POLYMERS, KOREAN FIBER SOCIETY, SEOUL, KR, vol. 17, no. 6, 6 July 2016 (2016-07-06), pages 857-861, XP035995487, ISSN: 1229-9197, DOI: 10.1007/S12221-016-5819-Y [retrieved on 2016-07-06]

## Description

### CROSS-REFERENCE TO RELATED APPLICATIONS

This application claims the benefit of Brazilian Patent Application No. BR102015033005-7, filed on December 30, 2015, which is incorporated by reference herein in its entirety.

### FIELD OF THE INVENTION

The present invention is directed to the production of a biopolymer, which may be applied both as an additive in the papermaking process, aiming at improving the physical and mechanical properties thereof in the process for producing cellulose, facilitating the drying process of the same, while conferring the same properties mentioned above to the production of paper, when it is processed.

The present invention further relates to the process for producing said biopolymer, the papermaking process, the process for producing cellulose, the use of said biopolymer and the product comprising said biopolymer.

### DESCRIPTION OF THE PRIOR ART

In general, the outermost constituent of plant cells is referred to as cell wall. It is composed of layers of cellulose microfibrils that may be divided into 3 parts: the primary wall, the lamellae, and the secondary wall.

Said microfibrils are embedded in a matrix composed of hemicellulose and lignin, so that the hemicellulose has the function of coating cellulose while the lignin is responsible for connecting the same through such coating, with few covalent bonds.

Another component present in the cell wall, the pectic fraction, consists of heterogenous, branched, highly hydrated polysaccharides rich in D-galacturonic acid having as its two fundamental constituents, homogalacturonan and ramnogalacturonan.

Said pectic fraction has the function of conferring porosity to the walls, providing charged surfaces that modulate wall pH and ion balance, regulating intercellular adhesion at the middle lamella, and serving as molecules that alert plant cells to the presence of symbiotic organisms, pathogens, and insects.

Finally, the main constituent of the cell wall is cellulose, a polysaccharide, which is the most abundant organic molecule in nature.

Cellulose is formed by glucose units attached in glycosidic bonds of the β-type (1-4), forming a high molecular weight polymer (300,000 to 500,000 g.mol⁻¹).

Further, its cyclic terminal unit may open to form a reducing aldehyde group, designated as the reducing terminal, which is easily degraded under alkaline conditions.

The physical structure of cellulose fiber is responsible for its properties and for its non-uniform reactions. This is due to the presence of amorphous and crystalline regions, in which the accessibility of chemical agents usually differs, leading to non-uniform reaction products.

Another important fact is that the fraction of hydroxyl groups available to interact with water is limited to the point of rendering the cellulose insoluble in this medium, despite its polarity.

Hemicelluloses or polyoses are heterogeneous materials, with a degree of polymerization varying between 80 and 200 (molar mass between 25,000 and 35,000g mol⁻¹).

Unlike cellulose, hemicelluloses have a random combination of monosaccharides including mainly pentoses (β-D-xylose, β-L-arabinose), hexoses (β-D-glucose, β-D-mannose, β-D-galactose) and uronic acids.

In this sense, the amount of hemicellulose that can be found in different plant sources is, for example: 25-34% for sugarcane bagasse; 25-38% for wheat husk; about 40% for husk of maize; 12-30% for rice; 33-44% for sorghum; and 28-38% for barley.

In addition to cellulose and hemicellulose, vegetable sources contain other polysaccharides, such as pectin and starch.

Starch is the main energy reserve polysaccharide. It consists of two components: amylose and amylopectin, both of which have a high molecular weight, especially amylopectin, which has a higher weight than cellulose.

Just as cellulose, amylose is composed glucose monomers, however on cellulose these are linked by β (1-4) linkages, and in starch by α (1-4) linkages.

Amylopectin, the other component of the starch, has in addition to α (1-4) bonds, α (1-6) bonds and is branched.

In general, natural polymers have hydroxyls which may undergo reactions such as etherification, esterification, oxidation and other reactions such as hydrolysis and reductions. Some examples of derivatives produced with cellulose or hemicellulose are given in the literature: methyl, cationic and acetylated derivatives, among others.

Hemicelluloses have great chemical potential for a reaction due to the presence of side chains in their structure, which gives it a less impeded spatial conformation, when compared to the cellulose structure, for chemical reactions in the hydroxyl groups of β-D-xylose, so that its modification is useful for adding or modifying its functionality, whereas such modifications or derivations provide opportunities to explore the various valuable properties of hemicellulose

In general, polysaccharides are hydrophilic substances and may be solvated because of their high content of hydroxyl groups. However, such groups are capable of forming hydrogen bonds with each other with such regularity and at such number that most of the neutral polysaccharides are insoluble in hydrophilic solvents.

Thus, the most recommended alkalis to overcome the interaction of hydroxyl groups in different degrees are: sodium hydroxide (NaOH) and potassium hydroxide (KOH). In any case, this reaction will still depend on the concentration of these alkalis and the digestion temperature.

The chemical degradation of carbohydrates during alkaline digestion involves different types of reactions, among which we can mention: alkaline numbness, alkaline dissolution, alkaline hydrolysis of acetyl groups, terminal depolymerization, alkaline hydrolysis of β-glycosidic bonds, alkaline fragmentation reaction, precipitation and adsorption and formation of hexenuronic acids. The determination of the type of reaction will be influenced by the amount of OH⁻.

During alkaline digestion, the hemicelluloses of low molecular weight and more accessible are solvated to a great extent, being disconnected from the adjacent molecules and dissolved in the digestion liquor. This solubilization is intensified when digestion is effected with high alkali charges and ends with residual excess of alkali and very high final pH.

Cationization of hemicelluloses increases their solubility and causes these molecules to have chemical properties similar to those of the derivatives obtained from the cellulose.

Thus, considering the possibility of developing new materials from maize, wheat, sorghum, rice, barley, sugarcane fiber or combinations thereof and/or its residual biomass, it is described in the present invention the preparation of cationic derivatives of hemicellulose, cellulose and other carbohydrates present in maize, wheat, sorghum, rice, barley, sugar cane fiber or combinations thereof.

It is estimated that paper, as it is known today, was invented around the second century in China, and has since become present in all cultures as an essential element.

Currently the conventional process for the production of cellulose and paper consists of the extraction and treatment of cellulose from wood. In particular, pines are used (because of the price and resistance due to the longer length of the fiber) or eucalyptus (because of the accelerated growth of the tree).

In order to improve or change the characteristics of the fibers produced, enhancers are routinely added to the processes.

Each enhancer has a specific function and purpose, therefore, seeking a particular property.

Among the enhancers, the addition of a cationized agent is known to improve the balance of the charges facilitating the interaction between cellulose fibers, thereby facilitating paper production and increasing the physical strength properties of the fibers. In short, cellulose is slightly electronegative due to the presence of oxydryl groups and, since all fibers have the same charge, they tend to repel each other and eventually bind with reduced force during the papermaking process.

In this scenario, the cationized agent has the ability to strongly interact with the cellulose fibers as it has an opposite charge, acting as a binder between them. As a consequence, the physical strength of the fiber produced is increased.

The most commonly used cationizers are derived from carbohydrates.

In this regard, patent US8969441 teaches a process for the production of cationized cellulose microfibers for use in the papermaking process. More specifically, it is disclosed that by subjecting plant fibers to a cationization process, they can be more easily defibrated in the presence of water, resulting in fibers having excellent strength which can be used in the production of papers or a composite resin.

Such a document further teaches that although cationization may be used to increase the interaction force of plant fibers through electrostatic interactions, this effect is poor since the amount of anionic groups in the fiber is small. In that sense, US8969441 discloses that microfibrillation of cationic fibers would be the best alternative.

On the other hand, the fibers described have a dimension of 4 to 200 mm and the process uses the quaternary ammonium as a cationization agent.

Such a process has the characteristic of cationization and micro-fibrillation of all the fiber used in the production of paper, that is, the cationized microfibrillated fibers are not only used as an additive in the papermaking process, but as raw material of the paper produced. Thus, an existing papermaking line which aimed at using the knowledge of US8969441 to improve the strength of its paper would require changes in the process in general, including the need for new equipment.

Document PI9607385-3 describes the effects of the addition of cationized cellulose in the papermaking process as a paper strength enhancer.

The cationized cellulose particles used in said document have an average size of 0.001 to 10 mm and are preferably spherical. If they are presented in the form of cationized cellulose fiber, they should not be longer than 0.5 mm in order to avoid problems.

The document further attributes to the cationized cellulose the characteristics of flocculating and retaining fine substances in the paper, that is, particles that can be incorporated into the paper, aiming at achieving better homogeneity and dimensional stability.

International patent application WO2014147293 relates to a process for the production of nano and microfibrillated cellulose. According to the document the process of fiber cationization may be used as a resource for the microfibrillation or nanofibrillation of cellulose, which are added to the papermaking process in order to facilitate the industrial processing of paper, reducing the expense of water and energy.

We may also cite as an example the document PI9501473-0, which teaches the chemical treatment of cellulose pulps, more specifically "metal cationization", for the production of a cellulose pulp suitable for papermaking.

According to the document the treated pulp has important chemical and physical properties that have been altered, such as:
a. Chemical indifference during rehydration of the pulp; and
b. Increase in mechanical strength, degree of hydration and pulp softness.

The document further teaches that there is a very strong relationship between the tensile strength of the pulp and the absorbed cation species, so that different characteristics can be obtained by altering the chemical composition of the inorganic components present in the cellulose pulps from chemical processes. Thus, it would even be possible for a paper manufacturer to specify the characteristics of the pulp he needs.

Finally, the international patent application WO2007121981 relates to cationized polysaccharides, preferably the starch, its preparation and use in the manufacture of papers. It is further taught that the cationic polysaccharides will be more strongly adsorbed due to electrostatic forces, making them a fortifying agent.

It is possible to note that that prior art documents mentioned above have in common the fact that they preferably use cellulose for the production of paper or starch in the cationizing process.

The present invention, in contrast, uses a biopolymer derived from plant fibers, including the possibility of using a residue from the starch extraction process, alcohol production, beer production, rice processing and flour production. That is, the present invention has also an environmental concern as it adds value to a waste that would possibly represent an environmental impact if discarded.

Finally, the present invention can still be incorporated into any conventional pulp or papermaking process without the need for adaptations for its use, since the biopolymer can be added in the liquid/pasty and functionalized form.

### OBJECTS OF THE INVENTION

A first objective of the present invention is to provide a biopolymer derived from a plant fiber, functionalized by a process of digestion and/or refining followed by cationization to be used as an additive in the process for producing paper or cellulose.

It is a second objective of the present invention to provide a process for the production of said biopolymer.

It is a third objective of the present invention to provide an additive for incorporation into the process for producing paper or cellulose using said biopolymer.

It is a fourth objective of the present invention to provide said functionalized biopolymer for the production of paper or cellulose with improved physical testing due to the functionality conferred by the same.

It is a fifth objective of the present invention to provide a product comprising said biopolymer.

### BRIEF DESCRIPTION OF THE INVENTION

The first objective of the invention is achieved through a biopolymer derived from a cationized cellulosic fiber of maize, wheat, sorghum, rice, barley, sugar cane or combinations thereof, having the following characteristics:
a. a size of 50 to 1000 µm in length and 5 to 80 µm in width; and
b. a degree of cationization ranging from 0.005 to 0.1%.

The second objective of the invention is achieved by a process for the production of said biopolymer comprising the steps of:
a. digesting the fiber of maize, wheat, sorghum, rice, barley, sugarcane bagasse or combinations thereof through a basic pH medium ranging from 10 to 14 and at a temperature ranging from 40 to 120°C, more preferably 50 to 80°C; and
b. cationization of the fiber obtained

Alternatively, this second objective is further achieved by a process for producing the biopolymer comprising the enzymatic digestion of a fiber by the addition of an enzyme of the type xylanase, cellulase or the combination of both, at a pH ranging from 4.0 to 7.0, preferably 5.0 to 5.5, and at a temperature between 40 and 80°C, preferably between 50 and 70°C, in which the fiber is subsequently cationized.

The third objective of the invention is achieved by a papermaking process comprising adding said biopolymer prior to or after the refining process.

Alternatively, this third objective is achieved by a process for producing cellulose in which the biopolymer is added to the dispersed cellulose prior to, during or after the bleaching process, prior to the setting thereof in the sheets for drainage.

The fourth objective of the invention is achieved by the use of said biopolymer in the production of paper and/or in the production of cellulose.

The fifth objective of the present invention is achieved through a product comprising said biopolymer.

### BRIEF DESCRIPTION OF DRAWINGS

The following is a brief description of the figures:

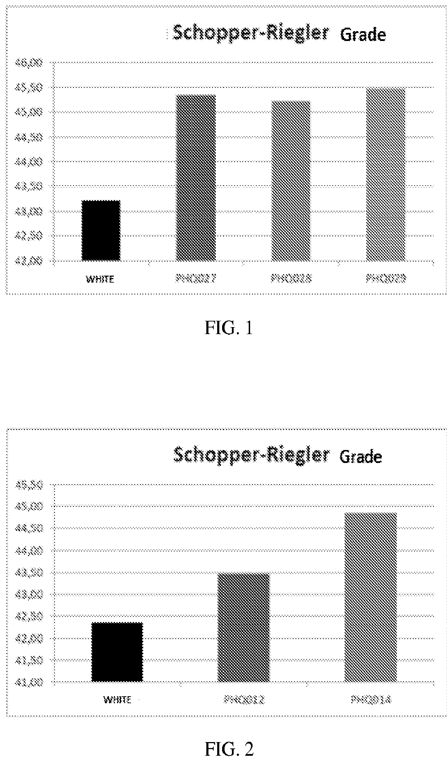

Figure 1 - Graph produced by the Schopper-Riegler Grade of samples PHQ 027, PHQ 028 and PHQ 029, containing the biopolymer, submitted to the cationization process for 6, 14 and 18 hours, respectively, compared to a control sample without the biopolymer, to determine the time of the cationization reaction.
Figure 2 - Graph produced by the Schopper-Riegler Grade of samples PHQ 012 and PHQ 014, containing the biopolymer, the first submitted to the cationization process after alcaline reaction and the second concomitant to alkaline digestion, in comparison with a control sample without the biopolymer, to assess the effects of cationization without prior digestion.

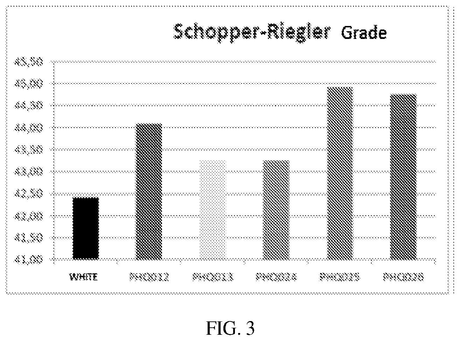

Figure 3 - Graph produced by the Schopper-Riegler Grade of samples PHQ 012, PHQ 013, PHQ 024, PHQ 025 and PHQ 026, containing the biopolymer, produced through the concentrations of 120, 100, 80, 60 and 40 kg of caustic soda/ton of fiber, respectively, compared to a control sample without the biopolymer, for optimum alkalinity gauging for cationization optimization.

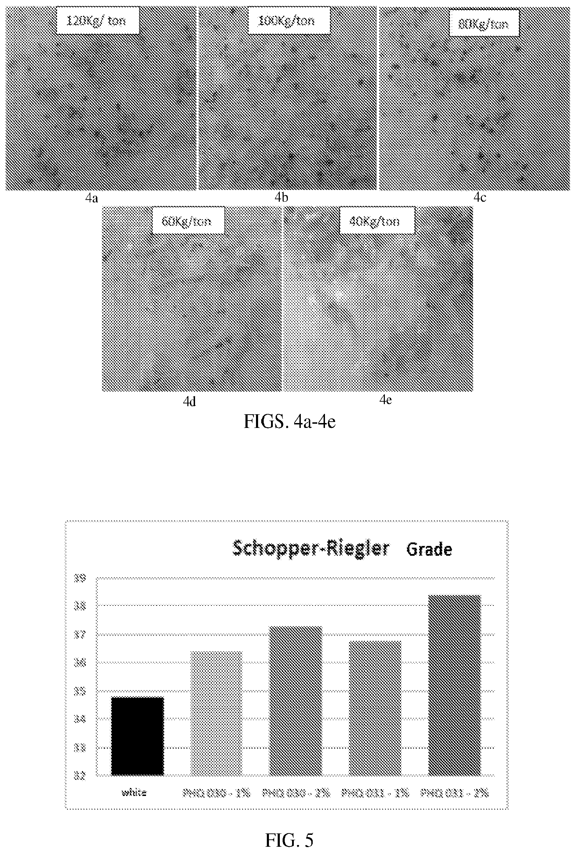

Figure 4 - Visual appearance of the dry biopolymer of samples PHQ 012, PHQ 026, PHQ 025, PHQ 024 and PHQ 013, produced through the concentrations of 120, 100, 80, 60 and 40 kg of caustic soda/ton of fiber is shown in Figures 4a, 4b, 4c, 4d and 4e, respectively.
Figure 5 - Graph produced by the Schopper-Riegler Grade of samples PHQ 030 and PHQ 031 with dosages of 1 and 2% by mass of the biopolymer with respect to the cellulosic mass, containing the biopolymer, PHQ 030 sample submitted to cationization with 3% of ammonium quaternary and sample PHQ 031 submitted to cationization with 5% of ammonium quaternary, by mass relative to the total weight of the composition, in comparison with a control sample without biopolymer, to evaluate the biopolymer at different degrees of cationization.

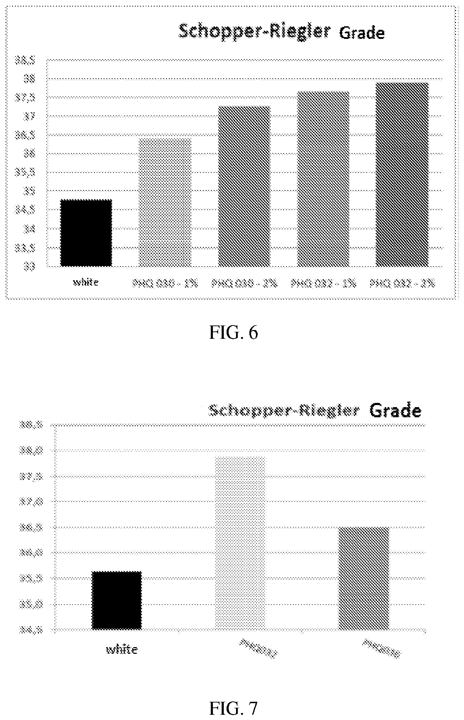

Figure 6 - Graph produced by the Schopper-Riegler Grade of samples PHQ 030 and PHQ 032 with dosages of 1 and 2% by mass of the biopolymer with respect to the cellulosic mass, containing the biopolymer, with different digestion times (respectively 8 and 2 hours) compared to a control sample without the biopolymer, to determine the best digestion time.
Figure 7 - Graph produced by the Schopper-Riegler Grade of samples PHQ 032 and PHQ 036, containing the biopolymer, the first one coming from the use of the whole husk and the second coming only from the soluble part resulting from the digestion of the maize husk compared to a control sample without the biopolymer.

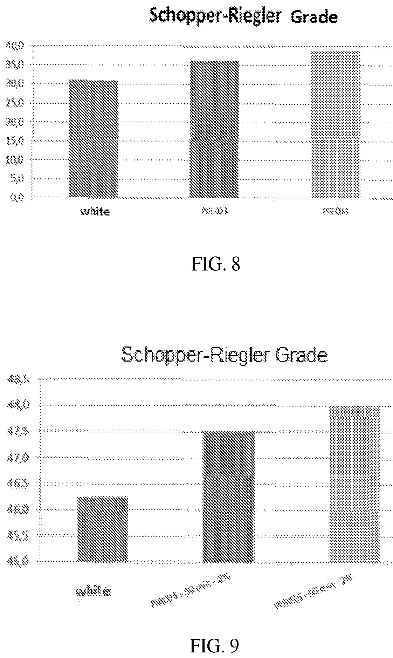

Figure 8 - Graph produced by the Schopper-Riegler Grade of the samples PIR 003 and PIR 004 with dosage of 2% by weight of the biopolymer with respect to the cellulosic mass, both of which are derived from the use of the whole wheat husk and the first was digested with 100 kg of NaOH/ton of fiber and the second with 120 kg of NaOH/ton of fiber, which were subsequently submitted to cationization with 5% ammonium quaternary, by mass in relation to the total weight of the composition, compared with a control sample.
Figure 9 - Graph produced by the Schopper-Riegler Grade of samples PIR 005 and PIR 035, with a dosage of 2% by mass of the biopolymer in relation to the cellulosic mass, both of which are derived from the use of sugarcane bagasse and digested with 120 kg of NaOH/ton of fiber, under pressure of 2 Bar and temperature of 120°C, the first having the digestion process for 15 minutes and the second for 60 minutes. Both samples were subsequently submitted to cationization with 5% quaternary ammonium, by mass, in relation to the total weight of the composition, compared to a control sample.

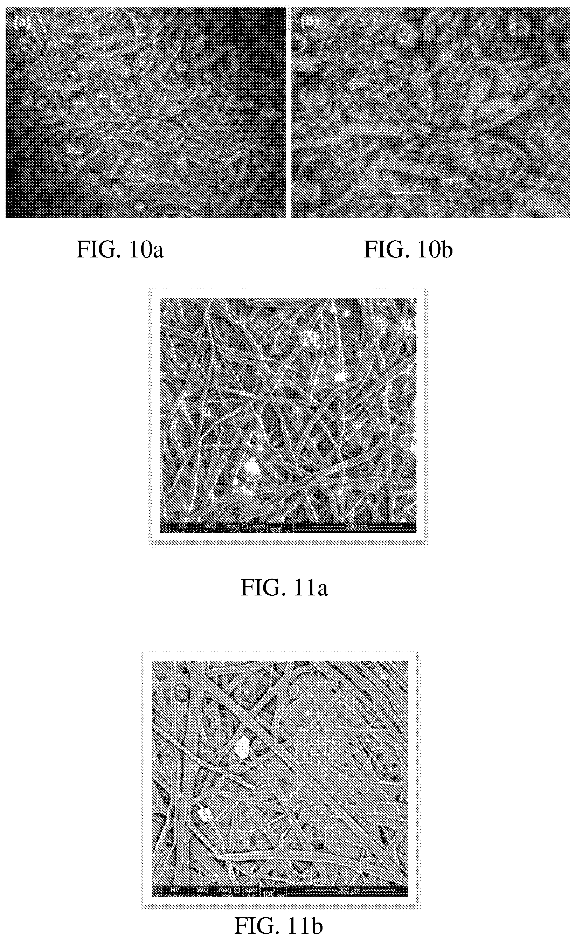

Figure 10 - Optical microscopy photomicrographs of the PFR008 sample with 100 and 200-fold magnification, is shown in Figures 10a and 10b, respectively.
Figure 11 - Photomicrographs of field emission scanning electron microscopy of samples BV and AM4-20-MR magnified 500 times is shown in Figures 11a and 11b, respectively.

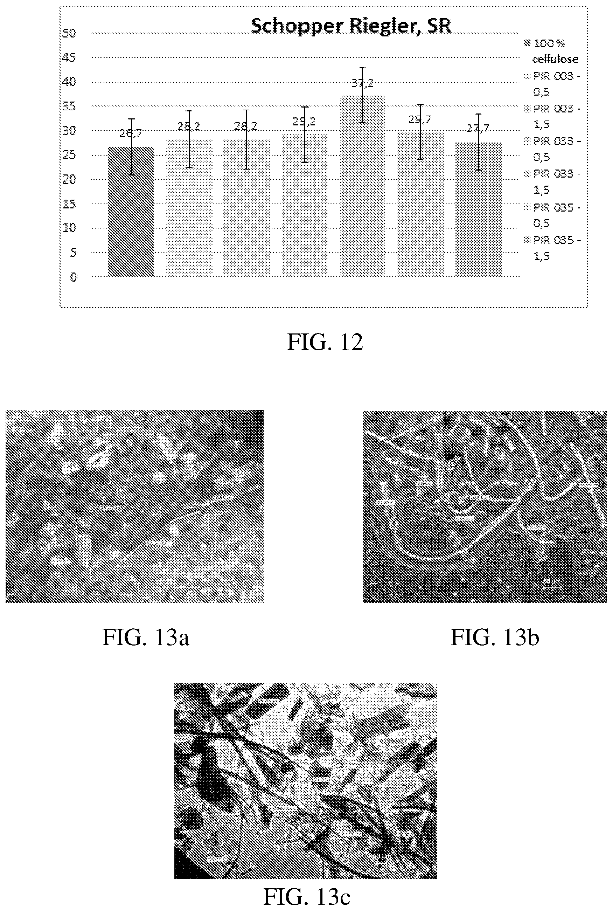

Figure 12 - Schopper-Riegler grade result graph for the resistance to drainage resulting from the sheet obtained from the samples of different sources of fiber (wheat, maize and sugarcane bagasse).
Figure 13 - Photomicrographs of the biopolymer obtained in samples PIR 003 (13a), PIR 033 (13b) and PIR 035 (13c).

### DETAILED DESCRIPTION OF THE INVENTION

In the present invention, biopolymer means the product derived from a vegetable fiber through a physico-chemical or enzymatic modification of the same. More specifically, the biopolymer of the present invention is derived from a vegetable fiber modified through physico-chemical or enzymatic reactions and subsequently cationized.

Said biopolymer, in a preferred embodiment of the invention, is obtained from the raw material of maize husk, wheat, sorghum, rice, barley, sugarcane bagasse or combinations thereof, which are cleaned to remove foreign matter such as pieces of cob, other types of grains, metallic particles, dust and other undesirable materials.

The following describes process for the separation of the husk of maize, wheat, sorghum, rice, barley or sugarcane bagasse. It is also important to highlight that one skilled in the art would be fully capable of making any necessary modifications to adapt the process to other sources of plant fibers considering that these processes are usual processes in the art.

### Process of separation of maize fiber (pericarp or husk)

For separation of the maize fiber (pericarp or husk), the grain is transported to large maceration tanks (Steep Tank).

Then, heated water (48-54°C) containing small amounts of dissolved sulfur dioxide circulates through said tanks for a period of 35 to 60 hours. Dilute sulfuric acid formed by the interaction of sulfur dioxide and water (SO2 + H2O → H2SO3) controls fermentation and helps in the separation of starch and proteins.

During this phase, the soluble components are extracted from the grain. Upon completion of the maceration phase, water is drained and concentrated in multi-effect evaporators to produce concentrated liquor. This extract, rich in proteins, is intended to the fiber in the production of ingredients for animal feed.

Next, the grains, already softened, pass through the mills where they are broken by friction and lose the fiber (husk), releasing the germ of the endosperm.

Water is added to the friction mills, resulting in a thick fluid mass of macerated grains and integral germ. As the germ, at this stage, contains 40 to 50% oil, it is lighter than the endosperm and the fiber. Then, separation of the germ is done by centrifugation.

The clean germ that has been separated is dried and the crude oil removed through mechanical presses. The residue of the germ, which remains after extraction of the oil, is used in animal feed.

The remaining fiber and endosperm mixture then passes through a series of grinding and filtering operations. The fiber particles are retained in the sieves, while the finer protein and starch particles pass.

The fiber can be used as an ingredient for animal feed and, when modified, has several applications such as, for example, reinforcing the physical properties of cellulose in papermaking.

The fluid mass of starch and gluten is separated by centrifugation. As starch and gluten differ in density, an almost complete separation is obtained. Usually, it is obtained a gluten flow containing about 60% protein, while the starch flow reaches 99%. Gluten is dried and sold to the animal feed market.

The white fluid mass ("slurry"), consisting almost entirely of pure starch, is then washed to remove small amounts of the solubles, and then it is concentrated through the use of filters or centrifuges and sent for drying in order to obtain the natural corn starch (unmodified).

Various modified starches or derivatives can be obtained by treating the fluid mass of washed starch with chemicals or enzymes. After treatment, the products are recovered by filtration or centrifugation and the product is dried and/or evaporated.

In total, the raw material grains pass through three mills, so that, in the third, there is a strict breaking of the remaining grains before being sent to the separation of the fiber.

The separation of the fiber is done in a battery of sieves that operate countercurrently to the water. The mixture (starch, gluten and fiber) is fed at the beginning of the washing process, passing sequentially through all the sieves until reaching the last stage, where it leaves the separation process with low concentration of starch and gluten.

After separation, the fiber passes through a dewatering where excess water is removed, and then fed into subsequent presses for further moisture removal, and then fed to the fiber pre-dryer.

The fiber used in the cationization process to obtain the biopolymer may be obtained after the washing process, after the dewatering of the same or using the same after drying.

The present invention describes a biopolymer, obtained from the cellulose husk of maize, wheat, sorghum, rice, barley, sugarcane bagasse or combinations thereof.

The sorghum bran/husk separation process is similar to the process of obtaining the maize fiber described above.

The sugarcane bagasse consists of the residue related to the processes of extraction of the grinding broth (milling or diffusion) practiced in the processes of alcohol and sugar production. The resultant moist bagasse is then prepared to achieve particle size and moisture specifications needed to meet the process described in the invention.

### Process of separation of wheat bran (pericarp or husk)

For wheat bran separation, wheat grains must first be pre-cleaned to remove common impurities such as dust, straw, sand, insects and other species of grain.

The wheat is then humidified and conditioned in resting silos for at least 18 hours, in order to soften the grain to facilitate the separation of wheat bran from the endosperm (flour) in the grinding process. The resting time will vary depending on the hardness of the grain.

After resting, wheat grains undergo a final cleaning where the removal of remaining residues of impurities will occur.

The grains are then destined to the milling lines, where they pass through grinding stages, carried out in the grinding rolls, thus extracting the endosperm from the wheat bran.

Then, these components undergo reduction in a set of smooth and fluted rolls followed by sieves, where the separation of the endosperm and other elements takes place.

Finally, both are milled separately to the point of obtaining wheat bran/husk, widely used for animal feed and the flour is destined to the food market in the manufacture of biscuits, pasta and baking in general.

### Process of separation of rice bran (pericarp or husk)

Rice bran can be obtained in the process of processing parboiled, white and/or brown rice.

In the process of producing parboiled, white and/or brown rice, it goes through a cleaning and pre-drying to reach the ideal storage humidity in silos.

In the parboiling process, this rice undergoes secondary cleaning in sieves, proceeding to a soaking stage, where the rice grains are precooked at about 68 to 76°C for about 6 to 7 hours. After this stage, rice grains pass through greenhouses at 400-500°C, for about 2 to 3 minutes, promoting the complete cooking of the grain and migration of nutrients (vitamins and minerals) present in the husk and germ to the grain.

The grains then go to dryers aiming at decreasing the humidity to around 12 to 13%, thus avoiding the proliferation of microorganisms.

After this process, the rice husk is frictionally removed between the rubber rollers which are pressed by pneumatic cylinders located inside the peelers.

The separation of the shell is performed inside air cameras.

The unpeeled grains (paddy) are separated in the paddy separators and the rice is polished leaving a smooth surface after the bran has been removed in the burnishing equipment.

In the process of producing white rice, the grains undergo secondary cleaning in sieves, followed by removal of the husk between rollers pressed by a pneumatic cylinder contained in the peelers.

Rice goes to air chambers with the purpose of separating the husk from the grain.

The unpeeled grains (paddy) are separated in the paddy separators and, finally, the rice is polished leaving a smooth surface after the bran has been removed in the burnishing and polishing equipment.

In the process of producing brown rice, the grains undergo secondary cleaning in sieves, followed by removal of the husk between rollers pressed by a pneumatic cylinder contained in the peelers.

The biopolymer may be obtained from the alkaline digestion or the enzymatic digestion of the fiber obtained according to the process described above, followed by processes which may or may not undergo the separation of soluble and insoluble parts, which is rich in cellulosic material, sugars, among other constituents.

### Fiber obtained by the process of alkaline digestion of the raw material

In a first embodiment of the present invention, the biopolymer is produced by the cationization of the fiber obtained in the alkaline digestion process.

In a preferred embodiment of the invention, said digestion is carried out in basic medium, having a pH between 10 and 14. In a further preferred embodiment of the invention, digestion of said fiber occurs at a pH of 12.

For the digestion step NaOH or KOH is used.

In an alternative embodiment of the present invention, said digestion process takes place in basic medium and high temperature.

In an alternative embodiment of the present invention, the digestion process takes place in a stirred and/or recirculation tank having a pH between 10 and 14, preferably 12, and at a temperature between 40 and 120°C, preferably 50 to 80°C, for at least 1 hour, preferably for 2 to 8 hours.

In a preferred embodiment of the invention, the step of extraction occurs at a temperature of from 40 to 120°C, preferably the medium is at a temperature of 70°C.

After digestion, cationization of the fiber obtained is carried out.

Alternatively, upon digestion of said fiber, the soluble and insoluble portions obtained may be separated.

Once the soluble and insoluble parts are separated, the cationization can be carried out only on the insoluble part or on both parts.

Currently, once the soluble and insoluble fractions are separated, the soluble part, rich in carbohydrates, is directed to the appropriate purposes. On the other hand, the insoluble part, rich in cellulosic material, polyses and sugars, has high potential for the cationization process.

In an alternative embodiment of the present invention, cationization occurs concomitantly with the alkalization of said fibers.

In an alternative embodiment of the present invention, cationization occurs after the alkalization of said fibers.

### Fiber obtained by the enzymatic digestion of the fibers extracted from the raw material

In a third embodiment of the present invention, the biopolymer is produced by the enzymatic digestion of the raw material using an enzyme of the type xylanase, cellulase or the combination of both.

In an alternative embodiment, the pH of the reaction medium is adjusted to the range of from 4.0 to 7.0, more preferably 5.0 to 5.5 with the aid of NaOH or KOH and the temperature of the medium is maintained between 40 and 80°C, more preferably between 50 and 70°C.

### Cationization of the fiber

Once processed as described above, the fiber undergoes a functionalization process originating the biopolymer of the present invention. In a preferred embodiment of the present invention, the functionalization process is cationization, more specifically cationization through the reaction with quaternary ammonium, for at least 1 hour, preferably 6 to 16 hours.

With cationization, the formed biopolymer now has positively charged sites, which have the ability to interact electrostatically with the naturally occurring negative sites on the cellulose fibers due to the presence of oxydryl groups.

When combined in the paper or cellulose production process, such interaction between the cationic (positive) of the biopolymer of the present invention and anionic (negative) groups of the cellulose ultimately increases the interaction force between the fibers and, as a result, the physical strength of the formed product is increased, in the case of paper or cellulose. As a result, the fiber of the present invention may be used as an enhancer in the processes for obtaining said products.

In a preferred embodiment of the invention, said biopolymer can be defined by the characteristics below:
a. the composition of sugars after the hydrolysis comprising: Arabinosis, Galactose, Glucose, Xylose, Mannose and Cellobiose and polymers thereof;
b. a size of 50 to 1000 µm in length and 5 to 80 µm in width; and
c. degree of cationization in the range of 0.005 to 0.1%, the preferred range being 0.010 to 0.05%.

In one embodiment of the present invention, the biopolymer is in aqueous solution, therefore in the liquid and activated state.

Given the large water retention capacity of the present biopolymer, it forms a liquid or pasty solution with viscosity varying according to the solids content in the solution.

In order to allow the solution to be pumped directly into the desired process, in a preferred embodiment, the total solids content ranging from 1 to 50% by weight of the biopolymer in relation to the volume of the solution. In a preferred embodiment of the invention, the total solids content varies from 10 to 20% by weight of the biopolymer in relation to the volume of the solution.

At a rate of 5% solids by weight with respect to the dry weight of the composition and at a temperature of 25°C, the aqueous solution comprising the biopolymer has a density between 0.900 to 1.300 g/mL and electrical conductivity between 3,000.0 and 25,000.0 µS/cm.

Further, in order to allow pumping of the obtained solution, in a preferred embodiment of the present invention, the viscosity of the solution is in the range of 10 to 90,000 cP at 50°C.

Finally, the pH obtained in the aqueous solution comprising the biopolymer preferably ranges from 5.0 to 12.0, but may comprise from 2.0 to 14.0.

In particular, the sugar composition after the hydrolysis, the carbohydrate composition and the particle size of the biopolymer have great relevance in the present invention since they are limiting factors for the application thereof in the papermaking process.

The sugar composition after the hydrolysis is important since the existing sugars are directly responsible for the sites that will undergo cationization, consequently, influencing the degree of cationization which is an essential element to define the interaction between the fiber of the present invention and the cellulose used in the papermaking process.

The size of the biopolymer is a limiting factor in the papermaking process since a very large (length or width) size will influence the homogeneity of the paper. A paper with low homogeneity has lower value, besides having more fragile points (resulting from the lack of homogeneity). On the other hand, a very small biopolymer may not result on the desired interaction with the cellulose fibers and, consequently, the increase in the physical strength of the paper will be less significant.

In a preferred embodiment of the invention, the cationizing agent is the quaternary ammonium which is added in the concentration of 1 to 9% by mass in relation to the total dry mass of the composition.

Once the biopolymer is functionalized, it has positively charged sites which have the ability to interact electrostatically with the naturally occurring negative sites on the cellulose fibers due to the presence of oxidyl groups.

Accordingly, the present invention further relates to a papermaking process using said biopolymer, whereby it is added to the papermaking process as an additive, more specifically as a physical strength enhancer, prior to or after the refining process.

It further relates to a process for producing cellulose using said biopolymer, where it is added in dispersion prior to, during or after the bleaching process, prior to the setting thereof in the sheets for drainage.

The advantage of the present invention is that the conventional paper production line does not need to be altered in any way for the addition of the biopolymer of the present invention. In other words, it is sufficient for the producer to add the desired specific amount of the biopolymer to the conventional components in his production line to obtain a product with greater physical strength.

Such a feature can be considered an advantage since various prior-art documents teach the cationization of the cellulose itself which will be transformed into paper. In addition to the need for appropriate reactors and reagents, this would lead to more steps in the production line and, consequently, higher costs and losses due to the increase in the production line.

Therefore, the present invention also relates to the use of the biopolymer as an enhancer in the papermaking process.

Furthermore, the present invention relates to a product comprising a biopolymer as defined herein, where it is added as a physical strength enhancer. This increase in resistance was detected by the traction, tear and burst assay. It was observed that the increase in such parameters was directly related to the increase in the degree of refining measured by the Schopper-Riegler equipment and, therefore, this method was adopted as an indicator of paper strength improvement.

### Examples and Assays

All the assays presented below were performed with the biopolymer obtained using the husk of maize, wheat and sugarcane bagasse as raw material.

However, it is important to stress that one skilled in the art would be fully capable, from the examples below, of inferring the applicability of the biopolymer obtained from various other raw materials by comparing the characteristics thereof. Such features are known and available in the state of the art.

For example, when we compare maize, wheat, rice and barley fibers, we have close results, as shown in the table below.

**Table 1 - Comparison of the main characteristics of the fibers of the different vegetal sources used**

| Fiber Source | Soluble fibers (g/100 g) | Insoluble fibers (g/100 g) | Water retention capacity (g/g) | Content of polysaccharides (g/100 g) | Sugars Composition (%) | |
|---|---|---|---|---|---|---|
| Maize Fiber | 1.9 | 79.1 | 3.34 | 8.0 | Ramnose | - |
| | | | | | Arabinose | 24 |
| | | | | | Xylose | 30 |
| | | | | | Manose | 2 |
| | | | | | Galactose | 5 |
| | | | | | Glucose | 32 |
| | | | | | Uronic acids | 7 |
| Wheat Fiber | 6.4 | 47.2 | 5.04 | 9.5 | Ramnose | - |
| | | | | | Arabinose | 24 |
| | | | | | Xylose | 36 |
| | | | | | Manose | 1 |
| | | | | | Galactose | 3 |
| | | | | | Glucose | 33 |
| | | | | | Uronic acids | 3 |
| Rice fiber | 4.5 | 29.5 | 3.00 | 13.0 | Ramnose | - |
| | | | | | Arabinose | 6 |
| | | | | | Xylose | 25 |
| | | | | | Manose | 1 |
| | | | | | Galactose | 2 |
| | | | | | Glucose | 57 |
| | | | | | Uronic acids | 9 |
| Barley | 3.5 | 57.1 | 3.37 | 15.1 | Ramnose | - |
| | | | | | Arabinose | 14 |
| | | | | | Xylose | 26 |
| | | | | | Manose | 3 |
| | | | | | Galactose | 1 |
| | | | | | Glucose | 51 |
| | | | | | Uronic acids | 5 |
| Sorghum | Not available | Not available | Not available | 6.7 | Ramnose | - |
| | | | | | Arabinose | 18 |
| | | | | | Xylose | 15 |
| | | | | | Manose | 3 |
| | | | | | Galactose | 2 |
| | | | | | Glucose | 51 |
| | | | | | Uronic acids | 11 |

It is observed, in particular, that the water retention capacity and the polysaccharide composition of these fibers are close.

### Determination of the time for the cationization reaction of maize fiber

A fiber obtained by the conventional fiber extraction process was diluted to 5-8% solids with water.

Subsequently, such fiber was digested with 120 kg of NaOH/ton of fiber at 60°C for 8 hours.

Then, 3% quaternary ammonium by mass were added relative to the total dry weight of the composition. Samples were withdrawn after 6 (PHQ 027), 14 (PHQ 028) and 18 hours (PHQ 029) of cationization, the samples were neutralized with 35% hydrochloric acid to a pH between 5.0 - 6.0.

The results are shown in the graph of figure 1 and are expressed in Schopper-Riegler Grade.

Based on the results, it can be concluded that 6 hours of cationization are sufficient to achieve an acceptable degree of cationization of the fiber subjected to alkaline digestion.

### Cationization of maize fiber without prior digestion

A fiber obtained by the conventional fiber extraction process was diluted to 5-8% solids with water.

Two samples were generated. In the first sample (PHQ 014), the fiber was digested with 120 kg of caustic soda/ton of fiber at 60°C for 8 hours. After this period, 3% quaternary ammonium by mass was added relative to the total dry weight of the composition, the reaction was terminated after 16 hours of cationization.

In the second sample (PHQ 012), 120 kg of caustic soda/ton of fiber at 60°C and concomitantly 3% of the quaternary ammonium were added, the reaction was terminated after 16 hours of cationization. In this sample prior digestion of the fiber was not performed.

The results are shown in the graph of figure 2 and are expressed in Schopper-Riegler Grade.

Based on the results, it can be concluded that prior digestion of the fiber favors a better cationization of the fiber, due to the fact that the carbohydrates present in the fiber composition are already available.

Cationizing and digesting at the same time is a viable route, but a lower application yield is obtained, but in return, the processing time of the cationic fiber is optimized.

### Determination of the optimum alkalinity for a good cationization of maize fiber

A fiber obtained by the conventional fiber extraction process was diluted to 5-8% solids with water.

Various concentrations of NaOH at 60°C were then added together with the 3% quaternary ammonium by mass relative to the total dry weight of the composition, the reaction was terminated after 16 hours.

The table below shows the concentrations of NaOH used in each of the samples tested.

**Table 2 - Alkalinity Values Tested**

| **Sample** | **Amount of NaOH (kg/ton of fiber)** | **Alkalinity (mL HCl 0.1N)** | **Theoretical yield of the digested material (%)** |
|---|---|---|---|
| PHQ 012 | 120 | 40 | 54 |
| PHQ 026 | 100 | 37 | 50 |
| PHQ 025 | 80 | 27 | 43 |
| PHQ 024 | 60 | 17 | 34 |
| PHQ 013 | 40 | 14 | 23 |

The results are shown in the graph of figure 3 and are expressed in Schopper-Riegler Grade.

Based on the results it is possible to conclude that the amount of 80 kg of NaOH/ton of fiber is sufficient to have good digestion/cationization. It is also possible to visualize that below 80 kg of NaOH/ton of fiber the process does not undergo adequate digestion, not providing the carbohydrates/poliosis and sugars necessary for the cationization, thus affecting negatively the increase of interaction and strength of the final material.

In addition, incomplete digestion of the fiber causes the formation of plaques that remain on the surface of the paper and are undesirable because they affect negatively the physical and visual properties of the same. This fact is evidenced by the low concentration of OH⁻ groups present in the digestion liquor which is not sufficient for the numbness of the microfibers (mainly intercrystalline) necessary for the penetration of the digestion liquor and the diffusion of the active reagents.

Finally, the available alkalinity is not sufficient for the cationization reaction.

Figures 4a, 4b, 4c, 4d and 4e show the visual appearance of the biopolymer obtained by samples PHQ 012, PHQ 026, PHQ 025, PHQ 024 and PHQ 013, respectively, after cationization process, the biopolymer obtained is the material Retained in the 42 mesh sieve.

### Evaluation of digestion of maize fiber by enzymatic process

A fiber obtained by the conventional fiber extraction process was diluted to 5-8% solids with water.

Subsequently, with the aid of 50% NaOH, the pH of the reaction was adjusted to the range of 5.0 - 5.5.

During the enzymatic digestion process the temperature was maintained at 60°C.

After adjusting the pH and temperature, the enzyme xylanase was dosed and the reaction conditions were maintained for 8 hours.

The Table below describes the variation of enzyme concentration in each of the generated samples.

**Table 3 - Dosage levels of xylanase enzyme.**

| **Samples** | **Amount of Xylanase, % dry basis** |
|---|---|
| PHQ 016 | 0.25 |
| PHQ 018 | 0.5 |
| PHQ 020 | 1.0 |
| PHQ 022 | 2.0 |

At the end of the 8-hour digestion, 40 kg of caustic soda/ton of fiber and 3% quaternary ammonium by mass were added relative to the total dry weight of the composition, and the reaction was terminated after 16 hours of cationization.

Enzymatic digestion is a process that does not allow the simultaneous cationization of the fiber due to the fact that the reaction conditions are different.

The table below shows the total, inorganic and organic solids contents and their yield in the filtrates obtained from the filtration in a 200 mesh sieve.

**Table 4 - Enzyme digestion yield**

| **Analysis** | **PHQ 016** | **PHQ 018** | **PHQ 020** | **PHQ 022** |
|---|---|---|---|---|
| **Total solids (%)** | 1.03 | 1.32 | 1.62 | 2.13 |
| **Organic solids (%)** | 1.00 | 1.30 | 1.58 | 2.08 |
| **Inorganic solids (%)** | 0.03 | 0.02 | 0.04 | 0.05 |
| **Yield of Organic Solids (%)** | 16.67 | 21.67 | 26.33 | 34.67 |

Thus, we conclude that the digestion of fiber via enzymatic processes is feasible.

Other types of enzymes, for example, cellulase or the combination thereof with xylanase, are also capable of promoting fiber digestion.

### Evaluation of the behavior of the biopolymer in different degrees of cationization

A fiber obtained by the conventional fiber extraction process was diluted to 5-8% solids with water.

Two samples were generated. In the first (PHQ 030), the fiber was digested with 80 kg of caustic soda/ton of fiber at 60°C for 8 hours. After this period, 3% quaternary ammonium by mass were added relative to the total dry weight of the composition, the reaction was terminated after an additional 6 hours.

In the second (PHQ 031), the fiber was digested with 80 kg of caustic soda/ton of fiber at 60°C for 8 hours. After this period, 5% quaternary ammonium by mass were added relative to the total dry weight of the composition, the reaction was terminated after an additional 6 hours.

The results are shown in the graph of figure 5 and are expressed in Schopper-Riegler Grade.

It may be concluded that the increase of the cationization favored the increase of the refining degree of the biopolymer and, consequently, the increased interaction and strength gain of the final material, thus allowing reduction of the sample dosage required in the preparation of the cellulosic mass.

This reduction reduces cost and provides an improvement in paper brightness.

### Evaluation of the behavior of the biopolymer of maize fiber with better digestion time

A fiber obtained by the conventional fiber extraction process was diluted to 5-8% solids with water.

Two samples were generated. In the first (PHQ 030), the fiber was digested with 80 kg of caustic soda/ton of fiber at 60°C for 8 hours. After this period, 3% quaternary ammonium by mass were added relative to the total dry weight of the composition, the reaction was terminated after an additional 6 hours.

In the second (PHQ 032), the fiber was digested with 80 kg of caustic soda/ton of fiber at 60°C for 2 hours. After this period, 3% quaternary ammonium by mass were added relative to the total dry weight of the composition, the reaction was terminated after an additional 6 hours.

The results are shown in the graph of figure 6 and are expressed in Schopper-Riegler Grade.

Thus, it is possible to conclude that the cationization performed after two hours of fiber digestion showed better results in the application. This can be related to the greater availability of the alkalizing agent in the reaction medium and also because there is already about 85% of the carbohydrates available in the reaction medium.

### Cationization of the filtrate obtained after the digestion of the fiber

A fiber obtained by the conventional fiber extraction process was diluted to 5-8% solids with water.

The digestion was carried out with 120 kg of NaOH/ton of fiber at 60°C for 8 hours.

The reaction medium was then subjected to a separation process with the aid of a decanter, which may or may not be conjugated with a centrifuge.

After separation, 3% of the ammonium quaternary by mass was added relative to the total dry mass of the composition in the soluble part, the reaction was terminated after a further 6 hours. During this period the same temperature conditions were maintained, resulting in the PHQ 036 sample.

The results are shown in the graph of figure 7 and are expressed in Schopper-Riegler Grade.

Thus, it can be concluded that the biopolymer obtained from the soluble fibers from the fiber digestion (PHQ 036) showed increased interaction and strength gain of the final material compared to the standard sample. However, it was evidenced that the mixture of soluble and insoluble materials (PHQ 032) has a better performance.

### Moisture and ashes of the biopolymer from the insoluble part of the alkaline digestion process of maize fiber

Because of the reaction conditions and physico-chemical characteristics of the biopolymer, the results show a high moisture content and relatively low amount of ashes as shown in the table below.

**Table 5 - Results of moisture and ash assays of chemically treated maize fiber**

| **Assay** | **Result** |
|---|---|
| Moisture/Volatiles at 105°C (%)* | 88.46 ± 0.14 |
| Ashes at 525°C (%)* | 3.30 ± 0.10 |

| | |
|---|---|
| * Percentage mass by the total mass of the biopolymer. | |

The results presented refer to the averages of 5 and 7 determinations for moisture and ash, respectively, using a confidence level of 95%

The values obtained indicate a high hydrophilicity of the biopolymer of the present invention.

### Moisture and ashes of the biopolymer from the insoluble part of the alkaline digestion process of maize fiber

The sugar content was measured by considering the adjusted volume of the suspension after hydrolysis due to gel formation. For this reason, the percentage values shown in the table below are approximations only.

The results presented are based on the dry mass of the biopolymer sample with sulfuric acid.

**Table 6 - Determination of the sugar content in the hydrolyzate of the sample of chemically treated maize fiber**

| **Analyte** | **Result (mg/L)** | **Result (%)** |
|---|---|---|
| Arabinose | 225.60 (16.29) | 12.60 (0.90) |
| Galactose | 69.90 (5.46) | 3.90 (0.30) |
| Glucose | 215.70 (15.56) | 12.05 (0.87) |
| Xylose | 337.10 (25.38) | 18.83 (1.41) |
| Manose | 11.57 (1.08) | 0.65 (0.06) |
| Cellobiosis | 16.40 (1.06) | 0.92 (0.06) |

The results presented in table 5 above refer to the average of 3 parallel determinations. The numbers in parentheses refer to the standard deviations of the results used.

In view of these results, it is noted that the main sugars present in the biopolymer are xylose and arabinose, responsible for the hemicellulose composition, and the glucose that constitutes cellulose and starch.

### Examples of application of the maize fiber biopolymer in paper formation - initial applications

Sheets of paper were prepared in the laboratory for physical assay.

The sheets were prepared according to conventional sheet forming method - ABNT NBR ISO 5269-1: 2006 using bleached eucalyptus sulphate pulp with drainage resistance Schopper-Riegler (SR) Grade 34. The biopolymer was added at concentrations of 0%, 10% and 20% by mass.

Microscopic analysis by scanning electron microscopy of the surface of the samples, and tensile strength test according to ABNT NBR NM ISO 1924-2: 2012 were carried out.

### Tensile strength of sheets formed with cellulosic pulp with and without the addition of maize fiber biopolymer from the alkaline digestion process

As mentioned above, sheets of paper were prepared using cellulosic pulp and concentrations of 0, 10 and 20% by mass of the biopolymer for measuring the increase in tensile strength.

The results are shown in the table below.

**Table 7 - Tensile strength of cellulosic pulp sheets with and without the addition of chemically modified maize fiber**

| **Amount of biopolymer (%, w/w)** | **Result** | |
|---|---|---|
| | **Tensile strength (kN/m)** | **Tensile strength index (N.m/g)** |
| 0 | 2.37 ± 0.17 | 37.24 |
| 10 | 2.68 ± 0.09 | 39.47 |
| 20 | 2.85 ± 0.10 | 39.82 |

The data presented in the table above refer to the average of 10 determinations, with a confidence level of 95%.

The data show that the addition of 10% by mass of biopolymer resulted in an increase in the tensile strength index.

### Schopper-Riegler Drainage Resistance

Cellulose pulp samples were also prepared according to the table below.

**Table 8 - Preparation of cellulose pulp samples**

| **Sample** | **Formulation** | | **Sample Code** |
|---|---|---|---|
| | **Biopolymer (% by weight)** | **Type of cellulose pulp** | |
| 01 Non-cationized fiber | 10 | Bleached virgin | AM2-10-BV |
| | 20 | Bleached virgin | AM2-20-BV |
| | 10 | Maroon recycled | AM2-10-MR |
| | 20 | Maroon recycled | AM2-20-MR |
| 02 Cationized fiber with a degree of substitution of 0.014% | 10 | Bleached virgin | AM3-10-BV |
| | 20 | Bleached virgin | AM3-20-BV |
| | 10 | Maroon recycled | AM3-10-MR |
| | 20 | Maroon recycled | AM3-20-MR |
| 03 Cationized fiber with a degree of substitution of 0.040% | 10 | Bleached virgin | AM4-10-BV |
| | 20 | Bleached virgin | AM4-20-BV |
| | 10 | Maroon recycled | AM4-10-MR |
| | 20 | Maroon recycled | AM4-20-MR |
| 100% bleached virgin eucalyptus cellulose pulp | | | BV |
| 100% maroon recycled cellulosic pulp | | | MR |

Each mixture was refined in a PFI mill by applying a fixed number of rotations to bleached eucalyptus pulp and another to maroon recycled cellulosic pulp.

The table below shows the drainage resistance obtained for each of the samples based on the Schopper-Riegler grade.

**Table 9 - Refining time and drainage resistance reached by the samples**

| **Sample Code** | **Refining Time (number of revolutions)** | **Drainage resistance (SR)** |
|---|---|---|
| BV | 4500 | 28.3 |
| AM2-10-BV | 4500 | 35.0 |
| AM3-10-BV | 4500 | 36.0 |
| AM4-10-BV | 4500 | 33.5 |
| AM2-20-BV | 4500 | 40.3 |
| AM3-20-BV | 4500 | 45.3 |
| AM4-20-BV | 4500 | 37.5 |
| MR | 500 | 28.0 |
| AM2-10-MR | 500 | 38.3 |
| AM3-10-MR | 500 | 42.3 |
| AM4-10-MR | 500 | 38.0 |
| AM2-20-MR | 500 | 47.0 |
| AM3-20-MR | 500 | 55.5 |
| AM4-20-MR | 500 | 46.5 |

Thus, it is possible to verify that the resistance to drainage is increased with the introduction of the biopolymer samples, indicating that the higher the amount thereof, the lower the dewatering speed.

Thus, it can be inferred that the increase in drainage resistance is due to the granulometric characteristics of the biopolymer, as well as its cationic characteristic. In other words, the biopolymer particles, due to their smaller size and opposite charges in relation to the wood fibers, interacted and closed the voids existing in the cellulosic web resulting from the refining, reducing the dewatering velocity and, consequently, increasing the interaction and weft strength.

It is also possible to conclude that the differences observed between the biopolymer samples are probably due to their different granulometric characteristics.

### Scanning electron microscopy of the surface of the samples sheets formed from the maize fiber biopolymer

The obtained sheets were analyzed by field emission scanning electron microscopy. The images were obtained using secondary electrons.

Figures 11a and 11b show 500-fold magnified photomicrographs of the BV and AM4-20-MR code mixtures, respectively. Through microscopy it was observed that the biopolymer interacts with the cellulosic structure of the paper, filling the empty spaces.

The biopolymer has positively charged sites, which have the ability to interact electrostatically with the negative sites on the cellulose fibers due to the presence of oxydryl groups. These events ultimately increase the strength of interaction between the fibers and, as a result, the physical strength of the formed product, both paper and cellulose, is increased.

As a result, the biopolymer of the present invention may be used as an enhancer of physical properties in the processes for obtaining said products.

Furthermore, the biopolymer favors the refining of the cellulose pulp, because it helps in the hydration of the fibers which facilitates their collapse, thus increasing their capacity of binding to each other.

Such interaction is demonstrated by the physical tests presented below.

### Tensile strength, tear and burst index of the samples sheets formed from the maize fiber biopolymer

The same samples described above for determination of Schopper-Riegler drainage resistance were subjected to tensile strength, tear and burst tests. The results obtained are shown in the table below.

**Table 10 - Results of tensile strength, tear and burst tests**

| **Sample Code** | **Tensile strength index (N.m/g)** | **Tear index (mN.m²/g)** | **Burst index (kPa.m²/g)** |
|---|---|---|---|
| BV | 25.14 ± 1.56 | 6.0 ± 0.6 | 1.5 ± 0.2 |
| AM2-10-BV | 35.15 ± 1.40 | 8.6 ± 0.9 | 2.4 ± 0.2 |
| AM3-10-BV | 34.05 ± 2.38 | 8.0 ± 0.7 | 2.5 ± 0.2 |
| AM4-10-BV | 34.27 ± 2.22 | 7.7 ± 0.9 | 2.5 ± 0.3 |
| AM2-20-BV | 38.36 ± 5.63 | 9.0 ± 0.8 | 2.7 ± 0.2 |
| AM3-20-BV | 39.53 ± 1.58 | 8.8 ± 1.1 | 3.0 ± 0.4 |
| AM4-20-BV | 38.08 ± 2.87 | 8.9 ± 0.7 | 2.8 ± 0.4 |
| MR | 29.12 ± 3.08 | 7.4 ± 0.6 | 1.6 ± 0.3 |
| AM2-10-MR | 38.27 ± 1.32 | 8.0 ± 0.4 | 2.1 ± 0.2 |
| AM3-10-MR | 39.74 ± 1.96 | 8.1 ± 0.4 | 2.2 ± 0.2 |
| AM4-10-MR | 38.81 ± 2.75 | 8.0 ± 0.4 | 2.1 ± 0.2 |
| AM2-20-MR | 42.87 ± 1.81 | 7.9 ± 0.4 | 2.4 ± 0.3 |
| AM3-20-MR | 43.09 ± 1.38 | 8.0 ± 0.4 | 2.8 ± 0.4 |
| AM4-20-MR | 41.92 ± 3.56 | 8.2 ± 0.4 | 2.3 ± 0.3 |

Thus, it can be seen that, in general, samples using bleached cellulosic pulp showed better results.

Taking into account the burst index, it is possible to affirm that there was, on average, an increase of 15.9% with the increase of the percentage of biopolymer samples from 10 to 20%.

### Application examples in paper forming - whole corn fiber and reduced concentration

A total of 8 biopolymer samples were prepared for analysis of the paper forming application according to the table below.

**Table 11 - Process for preparing biopolymer samples.**

| **Sample Reference** | **Preparation process** |
|---|---|
| PFR 002 | Whole fiber diluted at 10% solids digested in 80 kg of caustic soda/ton of fiber at 60°C for 8 hours. |
| PFR 003 | Whole fiber diluted at 10% solids digested in 100 kg of caustic soda/ton of fiber at 60°C for 8 hours. |
| PFR 004 | Whole fiber diluted at 10% solids digested in 120 kg of caustic soda/ton of fiber at 60°C for 6 hours. The product was washed with 7m³ of water/ton of product. After washing, 3% of the ammonium quaternary was added to the fibrous residue. The reaction was terminated after a further 6 hours. |
| PFR 005 | Whole fiber diluted at 10% solids digested in 80 kg of caustic soda/ton of fiber at 60°C for 2 hours. It was added 3% of quaternary ammonium to the product obtained. The reaction was terminated after a further 6 hours. |
| PFR 006 | Whole fiber diluted at 10% solids digested in 80 kg of caustic soda/ton of fiber at 60°C for 2 hours. It was added 3% of quaternary ammonium to the product obtained. The reaction was terminated after a further 6 hours. At the end, the pH was adjusted to 5.5 with 35% hydrochloric acid. |
| PFR 007 | Whole fiber diluted at 10% solids digested in 80 kg of caustic soda/ton of fiber at 60°C for 2 hours. It was added 5% of quaternary ammonium to the product obtained. The reaction was terminated after a further 6 hours. |
| PFR 008 | Whole fiber diluted at 10% solids digested in 100 kg of caustic soda/ton of fiber at 60°C for 2 hours. It was added 5% of quaternary ammonium to the product obtained. The reaction was terminated after a further 6 hours. |
| PFR 009 | Whole fiber diluted at 10% solids digested in 80 kg of caustic soda/ton of fiber at 60°C for 2 hours. It was added 5% of quaternary ammonium to the product obtained. The reaction was terminated after a further 6 hours. A clarification process was then carried out, where the pH was adjusted to the range of from 3.4-3.6 and the temperature to 42-45°C. It was added 0.8% hydrogen peroxide at 50% and 10% chlorite at 31% was measured. These inputs were measured on the dried fiber mass reacting for 4 hours. |

The paper sheets were prepared prepared in the laboratory for physical assays according to conventional sheet forming method - ABNT NBR ISO 5269-1:2006 using bleached eucalyptus sulphate pulp with drainage resistance Schopper-Riegler (SR) grade 32. The biopolymer samples were added at concentrations of 0%, 0.5% and 1.5% by mass.

### Schopper-Riegler Drainage Resistance

Cellulose pulp samples were also prepared according to the table below.

**Table 12 - Preparation of cellulose pulp samples**

| **Sample of Maize Fiber** | **Maize Fiber (% weight)** | **Mixture Code** |
|---|---|---|
| 100% bleached virgin eucalyptus cellulose pulp | | 100% BV |
| FPR 002 | 0.5 | FPR 002 - 0.5 |
| | 1.5 | FPR 002 - 1.5 |
| FPR 003 | 0.5 | FPR 003 - 0.5 |
| | 1.5 | FPR 003 - 1.5 |
| FPR 004 | 0.5 | FPR 004 - 0.5 |
| | 1.5 | FPR 004 - 1.5 |
| FPR 005 | 0.5 | FPR 005 - 0.5 |
| | 1.5 | FPR 005 - 1.5 |
| FPR 006 | 0.5 | FPR 006 - 0.5 |
| | 1.5 | FPR 006 - 1.5 |
| FPR 007 | 0.5 | FPR 007 - 0.5 |
| | 1.5 | FPR 007 - 1.5 |
| FPR 008 | 0.5 | FPR 008 - 0.5 |
| | 1.5 | FPR 008 - 1.5 |
| FPR 009 | 0.5 | FPR 009 - 0.5 |
| | 1.5 | FPR 009 - 1.5 |

Each mixture was refined in a PFI mill by applying a fixed number of rotations to bleached eucalyptus pulp and another to maroon recycled cellulosic pulp.

The table below shows the drainage resistance obtained for each of the samples based on the Schopper-Riegler grade.

**Table 13 - Drainage resistance reached by the samples**

| **Mixture Code** | **Drainage resistance (SR)** |
|---|---|
| **100% BV** | 26.7 ± 5.8 |
| **FPR 002 - 0.5** | 29.2 ± 5.7 |
| **FPR 002 - 1.5** | 30.7 ± 5.8 |
| **FPR 003 - 0.5** | 31.2 ± 5.7 |
| **FPR 003 - 1.5** | 36.2 ± 5.7 |
| **FPR 004 - 0.5** | 31.2 5.7 |
| **FPR 004 - 1.5** | 37.2 ± 5.7 |
| **FPR 005 - 0.5** | 31.2 ± 5.7 |
| **FPR 005 - 1.5** | 28.2 ± 5.7 |
| **FPR 006 - 0.5** | 27.5 ± 5.8 |
| **FPR 006 - 1.5** | 30.2 ± 5.7 |
| **FPR 007 - 0.5** | 29.7 ± 5.8 |
| **FPR 007 -1.5** | 31.7 ± 5.8 |
| **FPR 008 - 0.5** | 31.2 ± 5.7 |
| **FPR 008 - 1.5** | 29.7 ± 5.8 |
| **FPR 009 - 0.5** | 28.7 ± 5.8 |
| **FPR 009 - 1.5** | 26.2 ± 5.7 |

Thus, it can be seen that drainage resistance is increased with the introduction of the biopolymer samples in the case of the samples PFR 003 and PFR 004 at 1.5%.

### Tensile strength of sheets formed with cellulosic pulp with and without the addition of biopolymer from the process of alkaline digestion of whole maize fiber

As mentioned above, sheets of paper were prepared using cellulosic pulp and concentrations of 0, 0.5 and 1.5% by mass of the biopolymer for measuring the increase in tensile strength.

The results are shown in the table below.

**Table 14 - Results of tests on the properties of the tensile strength of cellulosic pulp sheets with and without the addition of chemically modified maize fiber**

| **Mixture Code** | **Tensile index, N.m/g** | **Elongation, %** | **Energy, J/m²** |
|---|---|---|---|
| **100 % BV** | 35.33 ± 3.71 | 2.9 ± 0.3 | 45.74 (7.87) |
| **PFR 002 - 0.5** | 33.29 ± 4.05 | 2.9 ± 0.3 | 44.17 (7.83) |
| **PFR 002 - 1.5** | 37.82 ± 3.32 | 3.1 ± 0.3 | 52.92 (7.78) |
| **PFR 003 - 0.5** | 38.26 ± 3.40 | 3.0 ± 0.4 | 52.78 (9.74) |
| **PFR 003 - 1.5** | 35.11 ± 1.46 | 2.4 ± 0.8 | 44.83 (5.82) |
| **PFR 004 - 0.5** | 34.88 ± 1.99 | 2.3 ± 0.8 | 42.12 (7.21) |
| **PFR 004 - 1.5** | 40.66 ± 4.85 | 2.8 ± 0.4 | 52.26 (10.69) |
| **PFR 005 - 0.5** | 35.31 ± 4.05 | 2.6 ± 0.5 | 40.97 (10.06) |
| **PFR 005 - 1.5** | 36.28 ± 3.22 | 2.7 ± 0.4 | 45.48 (7.65) |
| **PFR 006 - 0.5** | 32.52 ± 2.73 | 2.4 ± 0.3 | 37.19 (6.23) |
| **PFR 006 - 1.5** | 37.48 ± 1.93 | 2.9 ± 0.2 | 48.92 (3.95) |
| **PFR 007 - 0.5** | 32.10 ± 2.59 | 2.4 ± 0.3 | 33.77 (5.59) |
| **PFR 007 - 1.5** | 33.74 ± 2.61 | 2.3 ± 0.2 | 34.73 (4.85) |
| **PFR 008 - 0.5** | 37.50 ± 3.28 | 2.6 ± 0.4 | 44.01 (8.11) |
| **PFR 008 - 1.5** | 39.37 ± 1.96 | 3.1 ± 0.4 | 56.36 (6.51) |
| **PFR 009 - 0.5** | 34.65 ± 2.58 | 2.8 ± 0.3 | 44.36 (5.92) |
| **PFR 009 - 1.5** | 37.49 ± 2.14 | 3.0 ± 0.1 | 52.37 (3.40) |

The data presented in the table above refer to the average of 10 determinations, with a confidence level of 95%.

The data show that the addition of 1.5% by mass of biopolymer resulted in the increase in the tensile strength index.

### Tensile strength, tear and burst index

The same samples described above for determination of Schopper-Riegler drainage resistance were subjected to tensile strength, tear and burst assays. The results obtained are shown in the table below.

**Table 15 - Results of air permeance, tear and burst index tests**

| **Mixture Code** | **Air permeance, Gurley, µm/Pa.s** | **Tear index, mN.m2/g** | **Burst index kPa.m2/g** |
|---|---|---|---|
| **100 % BV** | 91.57 ± 11.83 | 6.8 ± 0.6 | 1.7 ± 0.1 |
| **PFR 002 - 0.5** | 81.01 ± 11.85 | 7.7 ± 1.0 | 1.6 ± 0.2 |
| **PFR 002 - 1.5** | 66.97 ± 6.33 | 7.8 ± 0.7 | 2.0 ± 0.2 |
| **PFR 003 - 0.5** | 80.80 ± 7.95 | 7.6 ± 1.2 | 1.9 ± 0.2 |
| **PFR 003 - 1.5** | 54.91 ± 3.57 | 7.9 ± 0.6 | 2.0 ± 0.2 |
| **PFR 004 - 0.5** | 77.54 ± 7.67 | 7.9 ± 0.9 | 1.7 ± 0.1 |
| **PFR 004 - 1.5** | 45.11 ± 14.68 | 9.4 ± 1.4 | 2.3 ± 0.1 |
| **PFR 005 - 0.5** | 60.91 ± 7.23 | 7.0 ± 0.9 | 1.6 ± 0.4 |
| **PFR 005 - 1.5** | 69.23 ± 12.79 | 7.6 ± 0.8 | 1.8 ± 0.2 |
| **PFR 006 - 0.5** | 81.63 ± 8.36 | 7.2 ± 0.7 | 1.7 ± 0.3 |
| **PFR 006 - 1.5** | 71.44 ± 5.07 | 7.9± 1.2 | 2.0 ± 0.2 |
| **PFR 007 - 0.5** | 62.90 ± 7.66 | 7.9 ± 1.1 | 1.8 ± 0.3 |
| **PFR 007 - 1.5** | 71.44 ± 5.07 | 7.5 ± 0.7 | 1.9 ± 0.1 |
| **PFR 008 - 0.5** | 66.27 ± 8.72 | 7.7 ± 1.3 | 1.9 ± 0.2 |
| **PFR 008 - 1.5** | 58.61 ± 6.38 | 8.6 ± 1.4 | 2.0 ± 0.2 |
| **PFR 009 - 0.5** | 77.14 ± 5.44 | 6.7 ± 0.5 | 1.5 ± 0.2 |
| **PFR 009 - 1.5** | 83.76 ± 14.19 | 7.7 ± 0.4 | 1.9 ± 0.2 |

Thus, it can be seen that, in general, there was an increase in tear and burst index with the introduction of corn fiber into the blend.

The difference between the highest value found for the tear index and the value for the sheet without maize fiber was 27%. For the burst index this difference was 31%.

### Comparison between the biopolymer from maize and other botanical sources of fiber

Fibers from wheat and sugarcane bagasse were used to produce the biopolymer, following a process similar to that used for maize.

As a comparative characterization, the moisture, oil, protein, starch, ash contents and the elemental composition were analyzed. Table 16 shows the values found for each raw material.

**Table 16 - Basic composition results for maize, sugarcane bagasse and wheat.**

| **Analysis** | **Maize Fiber** | **Wheat Fiber** | **Sugarcane bagasse** |
|---|---|---|---|
| **Humidity, %** | 7.79 | 10.68 | 16.16 |
| **Protein*, % b.c.** | 10.91 | 18.94 | 1.99 |
| **Oil, % b.s.** | 4.70 | 4.68 | 0.60 |
| **Starch, % b.s.** | 19.73 | 22.17 | 0.81 |
| **Ash, %** | 0.80 | 4.61 | 2.33 |

| | | | |
|---|---|---|---|
| * The factor used to calculate protein was 6.25. | | | |

### Wheat fiber test

For the wheat fiber (husk) test, two samples were generated: PIR 003 and PIR 004.

The first (PIR 003), whose digestion of the fiber was carried out with 100 kg of NaOH/ton of fiber at 60°C for 2 hours.

After this period, it was added 5% of quaternary ammonium and the reaction was terminated after a further 6 hours.

The second (PIR 004), whose digestion of the fiber was carried out with 120 kg of NaOH/ton of fiber at 60°C for 2 hours.

After this period, it was added 5% of quaternary ammonium and the reaction was terminated after a further 6 hours.

The comparative results obtained between these two samples are shown in the graph of Figure 8 and are expressed in Schopper-Riegler Grade, demonstrating a significant increase of the Schopper-Riegler Grade in the samples of the present invention.

### Sugarcane bagasse test

For the sugarcane bagasse test, two samples were generated: PIR 005 and PIR 035.

The first (PIR 005), whose digestion of the fiber was carried out with 120 kg of NaOH/ton of fiber under pressure of 2 Bar and at 120°C for 15 minutes.

After this period, the sample was removed from the pressure and 5% of ammonium quaternary was added at atmospheric pressure, maintaining the reaction at 60°C, ending the same after an additional 6 hours.

The second (PIR 035), whose digestion of the fiber was carried out with 120 kg of NaOH/ton of fiber under pressure of 2 Bar and at 120°C for 60 minutes.

After this period, the sample was removed from the pressure and 5% of ammonium quaternary was added at atmospheric pressure, maintaining the reaction at 60°C, ending the same after an additional 6 hours.

The comparative results obtained between these two samples are shown in the graph of Figure 9 and are expressed in Schopper-Riegler Grade, demonstrating a significant increase of the Schopper-Riegler Grade in the samples of the present invention.

### Comparative tests between samples obtained from different plant sources

Once the samples were determined by using wheat fiber and sugarcane bagasse with better results, a comparative test was carried out between them and a sample obtained from maize fiber.

To this end, the samples PIR 003 for the wheat and the sample PIR 035 for the sugarcane bagasse were chosen.

Further, a new maize sample, PIR 033, was prepared.

Said sample, PIR 033, was prepared by digesting the maize fiber with 100 kg of NaOH/ton of fiber at 60°C for 2 hours.

After this period, it was added 5% of quaternary ammonium and the reaction was terminated after a further 6 hours.

Illustrative figures of the biopolymer of samples PIR 003, PIR 033 and PIR 035 can be found on figures 13a, 13b and 13c respectively.

For the analysis, sheets of paper were formed by adding said samples at concentrations of 0.5 or 1.5% by weight.

For reference, the nomenclature of the sheets formed from the samples with different concentrations of biopolymer is according to the table below.

**Table 17 - Preparation of cellulose pulp samples from different fiber sources**

| **Sample** | **% by weight of biopolymer** | **Sample Code** |
|---|---|---|
| 100% bleached virgin eucalyptus cellulose pulp | | 100% BV |
| PIR 003 | 0.5 | PIR 003 - 0.5 |
| | 1.5 | PIR 003 - 1.5 |
| PIR 033 | 0.5 | PIR 033 - 0.5 |
| | 1.5 | PIR 033 - 1.5 |
| PIR 035 | 0.5 | PIR 035 - 0.5 |
| | 1.5 | PIR 035 - 1.5 |

### Schopper-Riegler Drainage Resistance

Then, the Schopper-Riegler drainage resistance was determined for the samples. The results are shown in the table below and illustrated in Figure 12.

**Table 18 - Schopper-Riegler grade result for the resistance to drainage resulting from the sheet obtained from the samples of different sources of fiber**

| **Sample Code** | **Drainage resistance (SR)** |
|---|---|
| 100% BV | 26.7 ± 5.8 |
| PIR 003 - 0.5 | 28.2 ± 5.8 |
| PIR 003 - 1.5 | 28.2 ± 6.1 |
| PIR 033 - 0.5 | 29.2 ± 5.7 |
| PIR 033 - 1.5 | 37.2 ± 5.7 |
| PIR 035 - 0.5 | 29.7 ± 5.7 |
| PIR 035 - 1.5 | 27.7 ± 5.8 |

As can be seen in the table, the samples containing the biopolymer of the present invention showed an increase in the Schopper-Riegler grade when compared to the sample consisting of 100% eucalyptus cellulose pulp.

It is also possible to observe that the samples obtained from maize, in particular using 1.5% by weight of biopolymer (PIR 033 - 1.5), was the sample with greater resistance to drainage.

### Tensile strength, tear and burst index

Moreover, the characteristics of the sheets obtained through the different samples were tested.

The results are shown in the table below.

**Table 19 - Results of air permeance, tear and burst index tests**

| **Mixture Code** | **Air permeance, Gurley, µm/Pa.s** | **Tear index, mN.m2/g** | **Burst index kPa.m2/g** |
|---|---|---|---|
| 100% BV | 91.57 ± 11.83 | 6.8 ± 0.6 | 1.7 ± 0.1 |
| PIR 003 - 0.5 | 74.64 ± 7.79 | 7.7 ± 0.7 | 1.9 ± 0.3 |
| PIR 003 - 1.5 | 76.55 ± 5.81 | 10.0 ± 1 | 2.1 ± 0.1 |
| PIR 033 - 0.5 | 82.12 ± 18.81 | 7.6 ± 0.5 | 1.8 ± 0.2 |
| PIR 033 - 1.5 | 80.41 ± 11.87 | 8.3 ± 0.4 | 1.9 ± 0.2 |
| PIR 035 - 0.5 | 75.51 ± 6.38 | 7.7 ± 1 | 1.6 ± 0.2 |
| PIR 035 - 1.5 | 78.61 ± 11.53 | 7.1 ± 0.5 | 1.8 ± 0.3 |

As can be seen, samples comprising the biopolymer of the present invention showed improvements in all parameters tested.

It is also possible to observe that the results obtained from samples of wheat and sugarcane bagasse (PIR 003 and PIR 035) are consistent with the expected results when compared to the sample obtained from maize (PIR 033) given the similarity of the composition of the fibers used.

### Tensile, elongation and energy assays

Finally, the samples obtained were tested for their traction index, elongation capacity and energy.

The results obtained are shown in the table below.

**Table 20 - Results of traction index, elongation capacity and energy tests**

| **Mixture Code** | **Tensile index, N.m/g** | **Elongation, %** | **Energy, J/m²** |
|---|---|---|---|
| 100% BV | 35.33 ± 3.71 | 2.9 ± 0.3 | 45.74 ± 7.87 |
| PIR 003 - 0.5 | 37.3 ± 7.05 | 3.0 ± 0.5 | 51.62 ± 15.25 |
| PIR 003 - 1.5 | 35.95 ± 2.75 | 3.3 ± 0.4 | 55.55 ± 7.66 |
| PIR 033 - 0.5 | 35.31 ± 3.1 | 3.1 ± 0.3 | 50.76 ± 4.50 |
| PIR 033 - 1.5 | 32.58 ± 1.09 | 3.2 ± 0.3 | 46.13 ± 4.04 |
| PIR 035 - 0.5 | 30.19 ± 1.9 | 2.7 ± 0.3 | 37.20 ± 5.41 |
| PIR 035 - 1.5 | 39.27 ± 5.66 | 3.1 ± 0.6 | 56.26 ± 13.85 |

The results show that the samples obtained from maize, wheat and sugarcane bagasse have a similar behavior, being close to the results obtained by the sample consisting of 100% eucalyptus cellulose. Thus, it shows that the sample does not interfere with important characteristics of the sheets of paper.

Thus, it clearly shows that fibers from different plant sources are feasible for application by the present invention, provided that the primary characteristics thereof such as the sugar composition or the soluble and insoluble fiber content are close.

## Claims

1. A biopolymer **characterized in that** it is derived from a cationized cellulose fiber of maize, wheat, sorghum, rice, barley, sugarcane or combinations thereof and **in that** it has:
a. a size of from 50 to 1000 µm in length and 5 to 80 µm in width; and
b. a degree of cationization ranging from 0.005 to 0.1%.

2. The biopolymer of claim 1, **characterized in that** it has a degree of cationization ranging from 0.010 to 0.05%.

3. The biopolymer of any one of claims 1 to 2, **characterized by** the fact that it is in an aqueous solution comprising:
i. a total solids content ranging from 1 to 50% by weight of the biopolymer by the total volume of the solution;
ii. viscosity ranging from 10 to 90,000 cP at 50°C;
iii. density ranging from 0.900 to 1.300 g/ml at 5% solids by weight at 25°C by the dry weight of the composition;
iv. electric conductivity ranging from 3,000.0 to 25,000.0 µS/cm at 5% solids by weight at 25°C by the dry weight of the composition; and
v. pH ranging from 2.0 to 14.0, preferably 5.0 to 12.0.

4. The biopolymer of any one of claims 1 to 3, **characterized in that** it is for use as paper or cellulose strength enhancer.

5. A process for producing a biopolymer, as defined in any one of claims 1 to 4, **characterized by** comprising the steps of:
A. digesting the fiber of maize, wheat, sorghum, rice, barley, sugarcane bagasse or combinations thereof through a basic pH medium ranging from 10 to 14 and at a temperature ranging from 40 to 120°C, more preferably 50 to 80°C; and
B. cationization of the fiber obtained in (A).

6. The process according to claim 5, **characterized in that** the digestion of the fiber occurs by the addition of NaOH or KOH at concentrations of from 40 to 180 kg/ton of fiber at a temperature ranging from 40 to 120°C, more preferably between 50 and 80°C.

7. The process according to any one of claims 5 or 6, **characterized in that** it additionally comprises the steps of separating the insoluble and soluble fractions obtained during the digestion step (A), so that the cationization may occur only in the insoluble part or in the insoluble and soluble parts.

8. The process for producing a biopolymer according to any one of claims 5 to 7, **characterized in that** the cationization may occur at the same time or after the alkalization of the fiber.

9. The process for producing a biopolymer as defined in any one of claims 1 to 4, **characterized by** comprising the enzymatic digestion of a fiber by the addition of an enzyme of the type xylanase, cellulase or the combination of both, at a pH ranging from 4.0 to 7.0, preferably 5.0 to 5.5, and temperature between 40 and 80°C, preferably between 50 and 70°C, in which the fiber is subsequently cationized.

10. The process for producing a biopolymer according to any one of claims 5 to 9, **characterized in that** cationization is carried out by adding 1 to 9% quaternary ammonium, by mass relative to the total dry mass of the composition, for a period of from 6 to 16 hours.

11. The biopolymer according to any one of claims 1 to 4, **characterized by** the fact that it is obtainable by the process defined in any one of claims 5 to 10.

12. The biopolymer according to any one of claims 1 to 4, **characterized by** the fact that it is obtainable from material rich in cellulose microfibrils, obtained in the process of manufacturing alcohol, beer, starch and/or flour from maize, wheat, sorghum, rice, barley and cationized sugarcane.

13. A process for producing paper, **characterized in that** it comprises the addition of a biopolymer as defined in any one of claims 1 to 4, 11 or 12, or obtainable by the process as defined in any one of claims 5 to 10, prior to or after the refining process.

14. A process for producing cellulose, **characterized in that** the biopolymer, as defined in any one of claims 1 to 4, 11 or 12, or obtainable by the process as defined in any one of claims 5 to 10, is added to the dispersing cellulose prior to, during or after the bleaching process, prior to settling it onto the drainage plates.

15. A product **characterized by** comprising a biopolymer as defined in any one of claims 1 to 4, 11 or 12, or obtainable by the process as defined in any one of claims 5 to 10.

## Patentansprüche

1. Biopolymer, **dadurch gekennzeichnet, dass** es von einer kationisierten Cellulosefaser aus Mais, Weizen, Sorghum, Reis, Gerste, Zuckerrohr oder Kombinationen davon abgeleitet ist und Folgendes aufweist:
a. eine Größe mit einer Länge von 50 bis 1000 µm und eine Breite von 5 bis 80 µm; und
b. eine Kationisierung im Bereich von 0,005 bis 0,1 %.

2. Biopolymer nach Anspruch 1, **dadurch gekennzeichnet, dass** es eine Kationisierung im Bereich von 0,010 bis 0,05 % aufweist.

3. Biopolymer nach einem der Ansprüche 1 bis 2, **dadurch gekennzeichnet, dass** es in einer wässrigen Lösung vorliegt, die Folgendes umfasst:
i. einen Gesamtfeststoffgehalt im Bereich von 1 bis 50 Gew.-% des Biopolymers bezogen auf das Gesamtvolumen der Lösung;
ii. eine Viskosität im Bereich von 10 bis 90.000 cP bei 50 °C;
iii. eine Dichte im Bereich von 0,900 bis 1,300 g/ml bei 5 Gew.-% Feststoffen bezogen auf das Trockengewicht der Zusammensetzung bei 25 °C;
iv. eine elektrische Leitfähigkeit im Bereich von 3.000,0 bis 25.000 µS/cm bei 5 Gew.-% Feststoffen bezogen auf das Trockengewicht der Zusammensetzung bei 25 °C; und
v. einen pH-Wert im Bereich von 2,0 bis 14,0, vorzugsweise 5,0 bis 12,0.

4. Biopolymer nach einem der Ansprüche 1 bis 3, **dadurch gekennzeichnet, dass** es zur Verwendung als Papier- oder Cellulosefestigkeitsverstärker vorgesehen ist.

5. Verfahren zum Herstellen eines Biopolymers nach einem der Ansprüche 1 bis 4, **dadurch gekennzeichnet, dass** es die folgenden Schritte umfasst:
A. Aufschließen der Faser aus Mais, Weizen, Sorghum, Reis, Gerste, Zuckerrohrbagasse oder Kombinationen davon durch ein Medium mit basischem pH-Wert im Bereich von 10 bis 14 und bei einer Temperatur im Bereich von 40 bis 120 °C, stärker bevorzugt 50 bis 80 °C; und
B. Kationisierung der in (A) gewonnenen Faser.

6. Verfahren nach Anspruch 5, **dadurch gekennzeichnet, dass** der Aufschluss der Faser durch die Zugabe von NaOH oder KOH in Konzentrationen von 40 bis 180 kg/Tonne Fasern bei einer Temperatur im Bereich von 40 bis 120 °C, stärker bevorzugt zwischen 50 und 80 °C, erfolgt.

7. Verfahren nach einem der Ansprüche 5 oder 6, **dadurch gekennzeichnet, dass** es zusätzlich die Schritte des Trennens der während des Aufschlussschritts (A) gewonnenen unlöslichen und löslichen Fraktionen umfasst, sodass die Kationisierung nur in dem unlöslichen Teil oder in dem unlöslichen und dem löslichen Teil erfolgen kann.

8. Verfahren zum Herstellen eines Biopolymers nach einem der Ansprüche 5 bis 7, **dadurch gekennzeichnet, dass** die Kationisierung gleichzeitig mit oder nach der Alkalisierung der Faser erfolgen kann.

9. Verfahren zum Herstellen eines Biopolymers nach einem der Ansprüche 1 bis 4, **dadurch gekennzeichnet, dass** es den enzymatischen Aufschluss einer Faser durch Zugabe eines Enzyms vom Typ Xylanase, Cellulase oder der Kombination aus beiden bei einem pH-Wert im Bereich von 4,0 bis 7,0, vorzugsweise 5,0 bis 5,5, und einer Temperatur zwischen 40 und 80 °C, vorzugsweise zwischen 50 und 70 °C, umfasst, wobei die Faser anschließend kationisiert wird.

10. Verfahren zum Herstellen eines Biopolymers nach einem der Ansprüche 5 bis 9, **dadurch gekennzeichnet, dass** die Kationisierung durch Zugabe von 1 bis 9 Masse-% quartärem Ammonium bezogen auf die Gesamttrockenmasse der Zusammensetzung über einen Zeitraum von 6 bis 16 Stunden erfolgt.

11. Biopolymer nach einem der Ansprüche 1 bis 4, **dadurch gekennzeichnet, dass** es durch das in einem der Ansprüche 5 bis 10 definierte Verfahren gewinnbar ist.

12. Biopolymer nach einem der Ansprüche 1 bis 4, **dadurch gekennzeichnet, dass** es aus einem Material gewinnbar ist, das reich an Cellulose-Mikrofibrillen ist, die beim Herstellen von Alkohol, Bier, Stärke und/oder Mehl aus Mais, Weizen, Sorghum, Reis, Gerste und kationisiertem Zuckerrohr gewonnen werden.

13. Verfahren zum Herstellen von Papier, **dadurch gekennzeichnet, dass** es die Zugabe eines Biopolymers nach einem der Ansprüche 1 bis 4, 11 oder 12, oder das durch das Verfahren nach einem der Ansprüche 5 bis 10 gewinnbar ist, vor oder nach dem Mahlprozess umfasst.

14. Verfahren zur Herstellung von Cellulose, **dadurch gekennzeichnet, dass** das Biopolymer nach in einem der Ansprüche 1 bis 4, 11 oder 12, oder das durch das Verfahren nach einem der Ansprüche 5 bis 10 gewinnbar ist, der dispergierenden Cellulose vor, während oder nach dem Bleichprozess zugegeben wird, bevor diese auf die Entwässerungsplatten aufgebracht wird.

15. Produkt, **dadurch gekennzeichnet, dass** es ein Biopolymer nach einem der Ansprüche 1 bis 4, 11 oder 12, oder das durch das Verfahren nach einem der Ansprüche 5 bis 10 gewinnbar ist, umfasst.

## Revendications

1. Biopolymère **caractérisé en ce qu'**il est dérivé d'une fibre de cellulose cationisée de maïs, blé, sorgho, riz, orge, canne à sucre ou combinaisons de ceux-ci et **en ce qu'**il a :
a. une taille de 50 à 1000 µm en longueur et 5 à 80 µm en largeur ; et
b. un degré de cationisation allant de 0,005 à 0,1 %.

2. Biopolymère selon la revendication 1, **caractérisé en ce qu'**il a un degré de cationisation allant de 0,010 à 0,05 %.

3. Biopolymère selon l'une quelconque des revendications 1 à 2, **caractérisé par le fait qu'**il est dans une solution aqueuse comprenant :
i. une teneur en solides totaux allant de 1 à 50 % en poids du biopolymère par rapport au volume total de la solution ;
ii. une viscosité allant de 10 à 90 000 cP à 50 °C ;
iii. une masse volumique allant de 0,900 à 1,300 g/ml à 5 % de matières solides en poids à 25 °C par rapport au poids sec de la composition ;
iv. une conductivité électrique allant de 3000,0 à 25 000,0 µS/cm à 5 % de matières solides en poids à 25 °C par rapport au poids sec de la composition ; et
v. un pH allant de 2,0 à 14,0, de préférence 5,0 à 12,0.

4. Biopolymère selon l'une quelconque des revendications 1 à 3, **caractérisé en ce qu'**il est utilisable en tant qu'agent augmentant la résistance de papier ou de cellulose.

5. Procédé de production d'un biopolymère, tel que défini dans l'une quelconque des revendications 1 à 4, **caractérisé en ce qu'**il comprend les étapes de :
A. digestion de la fibre de maïs, blé, sorgho, riz, orge, bagasse de canne à sucre ou combinaisons de ceux-ci par l'intermédiaire d'un milieu à pH basique allant de 10 à 14 et à une température allant de 40 à 120 °C, plus préférablement 50 à 80 °C ; et
B. cationisation de la fibre obtenue en (A).

6. Procédé selon la revendication 5, **caractérisé en ce que** la digestion de la fibre se produit par l'addition de NaOH ou KOH à des concentrations allant de 40 à 180 kg/tonne de fibre à une température allant de 40 à 120 °C, plus préférablement entre 50 et 80 °C.

7. Procédé selon l'une quelconque des revendications 5 ou 6, **caractérisé en ce qu'**il comprend en outre les étapes de séparation des fractions insoluble et soluble obtenues pendant l'étape de digestion (A), de sorte que la cationisation peut se produire uniquement dans la partie insoluble ou dans les parties insoluble et soluble.

8. Procédé de production d'un biopolymère selon l'une quelconque des revendications 5 à 7, **caractérisé en ce que** la cationisation peut se produire au même moment que ou après l'alcalinisation de la fibre.

9. Procédé de production d'un biopolymère tel que défini dans l'une quelconque des revendications 1 à 4, **caractérisé en ce qu'**il comprend la digestion enzymatique d'une fibre par l'addition d'une enzyme du type xylanase, cellulase ou la combinaison de l'une et de l'autre, à un pH allant de 4,0 à 7,0, de préférence 5,0 à 5,5, et à une température entre 40 et 80 °C, de préférence entre 50 et 70 °C, dans lequel la fibre est ensuite cationisée.

10. Procédé de production d'un biopolymère selon l'une quelconque des revendications 5 à 9, **caractérisé en ce que** la cationisation est effectuée en ajoutant 1 à 9 % d'ammonium quaternaire, en masse par rapport à la masse sèche totale de la composition, pendant une période allant de 6 à 16 heures.

11. Biopolymère selon l'une quelconque des revendications 1 à 4, **caractérisé par le fait qu'**il peut être obtenu par le procédé défini dans l'une quelconque des revendications 5 à 10.

12. Biopolymère selon l'une quelconque des revendications 1 à 4, **caractérisé par le fait qu'**il peut être obtenu à partir d'un matériau riche en microfibrilles de cellulose, obtenu dans le procédé de fabrication d'alcool, de bière, d'amidon et/ou de farine à partir de maïs, blé, sorgho, riz, orge et canne à sucre cationisée.

13. Procédé de production de papier, **caractérisé en ce qu'**il comprend l'addition d'un biopolymère tel que défini dans l'une quelconque des revendications 1 à 4, 11 ou 12, ou pouvant être obtenu par le procédé tel que défini dans l'une quelconque des revendications 5 à 10, avant ou après le procédé de raffinage.

14. Procédé de production de cellulose, **caractérisé en ce que** le biopolymère, tel que défini dans l'une quelconque des revendications 1 à 4, 11 ou 12, ou pouvant être obtenu par le procédé tel que défini dans l'une quelconque des revendications 5 à 10, est ajouté à la cellulose de dispersion avant, pendant ou après le procédé de blanchiment, avant son dépôt sur les plaques de drainage.

15. Produit **caractérisé en ce qu'**il comprend un biopolymère tel que défini dans l'une quelconque des revendications 1 à 4, 11 ou 12, ou pouvant être obtenu par le procédé tel que défini dans l'une quelconque des revendications 5 à 10.
